# EUROPEAN PATENT APPLICATION

(11) **EP 4 439 136 A1**
(43) Date of publication of application: **02.10.2024**
(21) Application number: 24158580.1
(22) Date of filing: 20.02.2024
(51) Int. Cl.: G02B 5/18

(54) **BILAYER BINARY 2D GRATINGS FOR WAVEGUIDE DISPLAY**

(30) Priority: 30.03.2023 US 202363493087 P; 05.12.2023 US 202318529322
(71) Applicant: Meta Platforms Technologies, LLC, Menlo Park, CA 94025 (US)
(72) Inventor: Farrell, Richard, Menlo Park (US); Zhao, Bo, Menlo Park (US); Buddhiraju, Siddharth, Menlo Park (US); Mohanty, Nihar Ranjan, Menlo Park (US); Rozenburg, Keith, Menlo Park (US); Yang, Zhaohui, Menlo Park (US)
(74) Representative: Murgitroyd & Company

(57) **Abstract**

A bilayer binary 2D surface relief grating includes a primary grating layer having an array of primary grating elements, and a secondary grating layer having an array of secondary grating elements overlying the primary grating layer, where the secondary grating elements are at least partially laterally offset from the primary grating elements. A method of manufacturing such a surface relief grating includes forming a low refractive index layer over a substrate, the low refractive index layer including a primary sub-layer having an array of primary openings and a secondary sub-layer overlying the primary sub-layer and having an array of secondary openings, where the secondary openings are at least partially laterally offset from the primary openings, and forming a high refractive index layer within the primary and secondary openings.

## Description

### TECHNICAL FIELD

The present disclosure relates generally to surface relief gratings.

### BACKGROUND

A waveguide display system may include a micro-display module and waveguide optics for directing a display image to a user. The micro-display module may include a light source, such as a light emitting diode (LED). The waveguide optics may include input-coupling and output-coupling elements such as surface relief gratings that are configured to couple light into and out of the waveguide.

It would be beneficial to develop performance-enhancing waveguide optics, and particularly input-coupling and output-coupling elements that are economical to manufacture while exhibiting improved design flexibility and functionality.

### SUMMARY

According to a first aspect, there is provided a surface relief grating comprising: a primary grating layer including an array of primary grating elements; and a secondary grating layer including an array of secondary grating elements overlying the primary grating layer, wherein the secondary grating elements are at least partially laterally offset from the primary grating elements.

Each of the secondary grating elements may at least partially overlies a respective one of the primary grating elements.

The primary grating layer may comprise a 2D array of the primary grating elements. The secondary grating layer may comprise a 2D array of the secondary grating elements.

The primary grating elements and the secondary grating elements may each comprise substantially vertical sidewalls.

The primary grating elements and the secondary grating elements may each comprise a substantially oval areal profile or a substantially circular areal profile.

The primary grating elements and the secondary grating elements may each comprise a high refractive index material.

The primary grating layer may comprise a primary low refractive index matrix surrounding the primary grating elements. The secondary grating layer may comprise a secondary low refractive index matrix surrounding the secondary grating elements.

The surface relief grating may further comprise a tertiary grating layer including an array of tertiary grating elements overlying the secondary grating layer. The tertiary grating elements may be at least partially laterally offset from the secondary grating elements.

Respective pairs of the primary and secondary grating elements may form a grating structure having an effective slant angle.

The effective slant angle may vary as a function of position across the primary and secondary grating layers.

According to a second aspect, there is provided a surface relief grating comprising: a primary grating layer including an array of primary grating elements; and a secondary grating layer including an array of secondary grating elements, wherein respective pairs of the primary and secondary grating elements form a grating structure having a slant angle.

The primary grating elements and the secondary grating elements may each comprise substantially vertical sidewalls.

The slant angle may vary as a function of position across the primary and secondary grating layers.

According to a third aspect, there is provided a method comprising: forming a low refractive index layer over a substrate, the low refractive index layer comprising a primary sub-layer having an array of primary openings and a secondary sub-layer overlying the primary sub-layer and having an array of secondary openings, wherein the secondary openings are at least partially laterally offset from the primary openings; and forming a high refractive index layer within the primary and secondary openings.

Forming the low refractive index layer may comprise nanoimprint lithography.

Forming the low refractive index layer may comprise nano-replication.

The substrate may comprise an inorganic solid selected from the group consisting of silicon carbide, lithium niobate, and a high-index glass.

The primary openings and the secondary openings may each comprise substantially vertical sidewalls.

Forming the high refractive index layer may comprise a process selected from the group consisting of chemical vapor deposition, epitaxial deposition, atomic layer deposition, and electron beam deposition.

The high refractive index layer may backfill the primary and secondary openings.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1 is a schematic cross-sectional view of a waveguide display system.
FIG. 2 shows cross-sectional and perspective views of a surface relief grating having a bilayer binary 2D architecture.
FIG. 3 is a cross-sectional view of a bilayer binary grating with grating structures having a variable slant angle.
FIG. 4 illustrates a process flow for manufacturing a bilayer binary 2D surface relief grating.
FIG. 5 depicts a method of manufacturing a bilayer binary 2D surface relief grating.
FIG. 6 illustrates a method of manufacturing a bilayer binary 2D surface relief grating.
FIG. 7 shows a cross-sectional view of a surface relief grating having a multilayer architecture.
FIG. 8 is an illustration of exemplary augmented-reality glasses that may be used in connection with embodiments of this disclosure.
FIG. 9 is an illustration of an exemplary virtual-reality headset that may be used in connection with embodiments of this disclosure.

Throughout the drawings, identical reference characters and descriptions indicate similar, but not necessarily identical, elements. While the examples described herein are susceptible to various modifications and alternative forms, specific examples have been shown by way of example in the drawings and will be described in detail herein. However, the examples described herein are not intended to be limited to the particular forms disclosed. Rather, the present disclosure covers all modifications, equivalents, and alternatives falling within the scope of the appended claims.

### DETAILED DESCRIPTION

Example grating structures may have a two-dimensional periodicity. In some examples, a vertical grating coupler, for instance, may be configured to change an out-of-plane wave-vector direction of light to an in-plane waveguide direction, or vice versa, and accordingly direct the passage of light through the waveguide display.

In exemplary systems, the waveguide optics may be advantageously configured to create illuminance uniformity and a wide field of view (FOV). The FOV relates to the angular range of an image observable by a user, whereas illuminance uniformity may include both the uniformity of image light over an expanded exit pupil (exit pupil uniformity) and the uniformity of image light over the FOV (angular uniformity). As will be appreciated, an input-coupling grating may determine the angular uniformity and coupling efficiency of image light.

In accordance with various examples, a surface relief grating may include a bilayer binary architecture having a pair of adjacent grating layers. By controlling both the interlayer and the intralayer grating geometries, including the relative displacement between paired grating elements amongst neighboring layers of the bilayer, the surface relief grating may present an effective slant angle that may be locally tuned. That is, two or more non-slanted grating elements within a bilayer or multilayer structure may cooperate to form a single slanted grating structure having an effective slant angle.

A surface relief grating having a variable slant angle may enable improved device performance relative to a comparative surface relief grating having a constant slant angle across an array of grating elements. A surface relief grating having a spatially variable slant angle architecture may be incorporated into the input coupling element and/or the output coupling element of a waveguide display.

In examples, a surface relief grating may include (a) a primary grating layer having an array of primary grating elements, and (b) a secondary grating layer having an array of secondary grating elements overlying the primary grating layer, where the secondary grating elements are at least partially laterally offset from the primary grating elements. Such a surface relief grating may be characterized by a spatially varying slant angle.

A method of manufacturing such a surface relief grating may include (a) forming a low refractive index layer over a substrate, the low refractive index layer including (i) a primary sub-layer having an array of primary openings, and (ii) a secondary sub-layer overlying the primary sub-layer and having an array of secondary openings, where the secondary openings are at least partially laterally offset from the primary openings, and (b) forming a high refractive index layer within the primary and secondary openings.

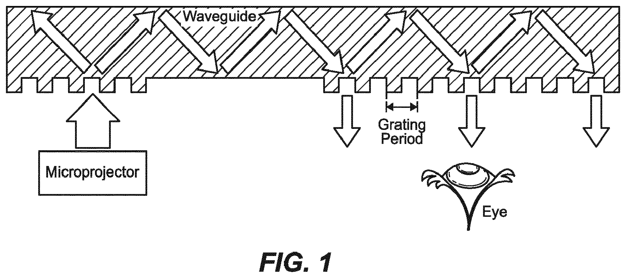

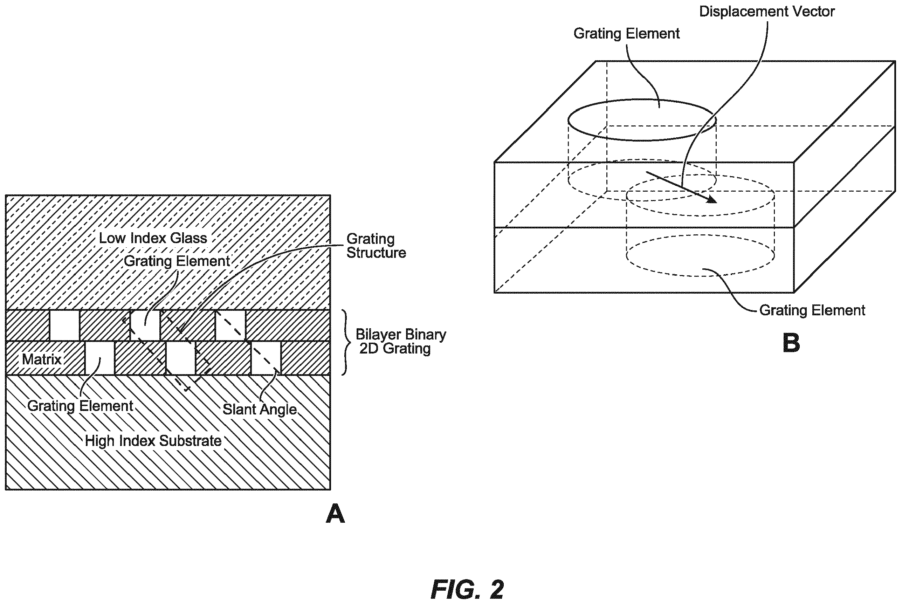

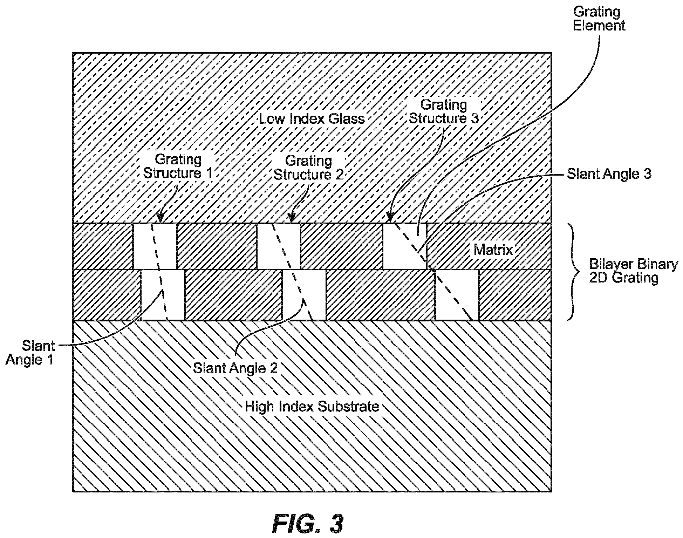

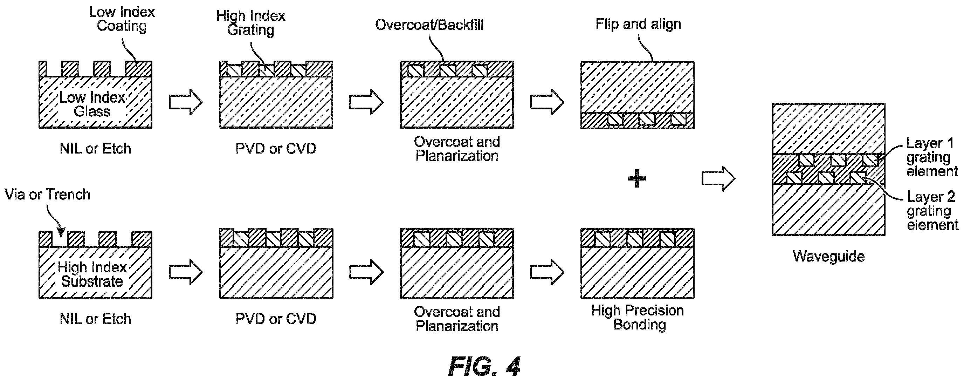

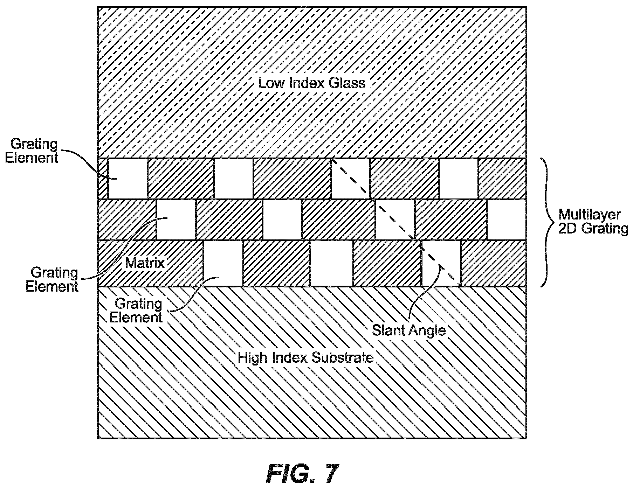

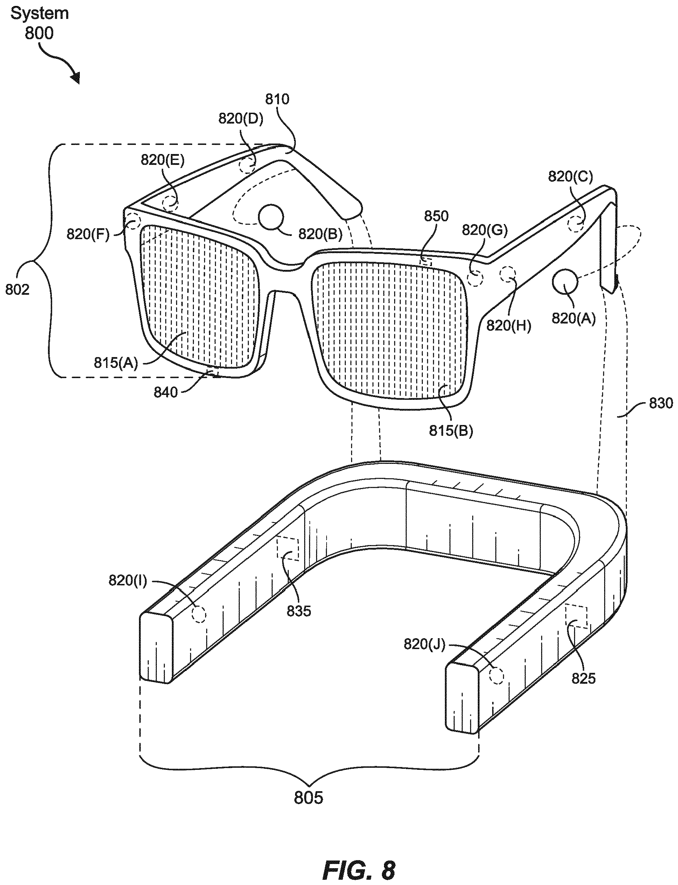

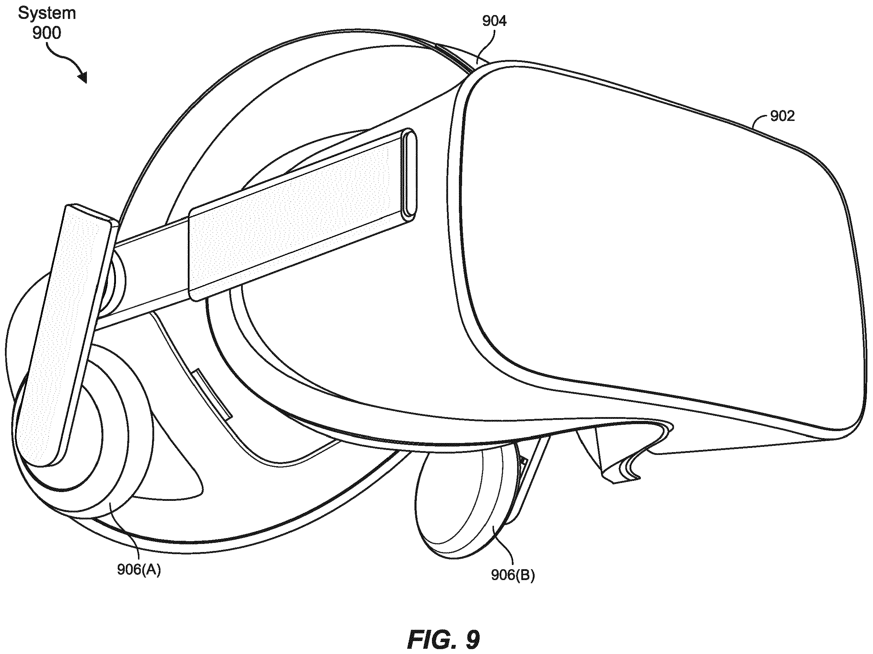

The following will provide, with reference to FIGS. 1-9, detailed descriptions of bilayer binary 2D grating architectures and example methods for their manufacture. The discussion associated with FIG. 1 includes a description of a waveguide display. The discussion associated with FIGS. 2 and 3 includes a description of exemplary bilayer binary grating structures. The discussion associated with FIGS. 4-6 includes a description of methods of forming bilayer binary 2D gratings for waveguide applications. The discussion associated with FIG. 7 includes a description of a multilayer binary grating structure. The discussion associated with FIGS. 8 and 9 relates to exemplary virtual reality and augmented reality devices that may include one or more waveguide architectures as disclosed herein.

Referring to FIG. 1, shown is a simplified cross-sectional view of a waveguide display including a diffractive exit pupil expander. During operation, projected image light may be in-coupled into the waveguide via a surface relief grating that is configured to diffract the light into multiple diffraction orders. The light paths may be determined by the grating geometry, including the grating period and the effective slant angle of the various grating elements. For certain optical relationships, the in-coupled image light may undergo total internal reflection (TIR) and propagate within and across the waveguide. The light beam may then be expanded and out-coupled from the waveguide via a second surface relief grating and directed to an eye of a user.

Turning to FIG. 2, shown are (A) cross-sectional and (B) perspective views of a surface relief grating having a bilayer binary architecture. The grating architecture is sandwiched between a low refractive index glass layer and a high refractive index substrate (i.e., waveguide) and includes a pair of layers each having a grating architecture composed of high refractive index grating elements that extend through a low refractive index matrix across one or two-dimensions. Referring to FIG. 2A, the individual grating elements in the neighboring layers have substantially vertical sidewalls, yet are laterally offset to define a bilayer binary grating having an effective slant angle as shown in silhouette. Manufacture of the bilayer binary structure shown in FIG. 2A may be less complex and more economical than the formation of grating elements having a genuine slant angle. Moreover, a pixelated bilayer binary architecture may be configured to duplicate or even exceed the performance and efficiency of a grating having elements with sloped sidewalls.

The grating elements may have any suitable dimensions and a substantially oval or circular areal profile, for example, and as illustrated in FIG. 2B, may be laterally displaced amongst individual pairs by a constant or spatially variable displacement vector. Accordingly, by controlling the dimensions and relative position of the individual grating elements, the effective slant angle and hence the performance of the grating may be tuned across a coupling or decoupling area of the waveguide. In some examples, the size and shape of the grating elements within a given layer may be uniform or may vary. Moreover, the size, shape, and pitch of the grating elements in neighboring layers may be uniform or may vary. In some examples, where individual grating elements are arrayed at a pitch (L), the magnitude of the displacement vector may range from 0 to L.

In particular examples, the slant angle of individual grating structures may vary across the area of a bilayer binary 2D grating. Shown in FIG. 3 is a bilayer binary grating having grating structures each with an independently-defined slant angle. That is, the slant angles may vary as a function of position within the bilayer binary 2D grating (e.g., a slant angle 1 for grating structure 1, a slant angle 2 for grating structure 2, a slant angle 3 for grating structure 3, etc.). Various methods, including nanoimprint lithography (NIL) or lithography and etching techniques, may be used to form the bilayer binary grating.

Referring to FIG. 4, illustrated is an example method of manufacturing a bilayer binary 2D grating where each grating layer is formed separately over a respective substrate. The separate grating layers are then aligned, merged, and bonded along a common interface. The thickness of an adhesive layer, if used to bond the grating layers, may be less than approximately 60 nm, e.g., 20, 30, 40, or 50 nm, including ranges between any of the foregoing values.

Referring still to FIG. 4, after defining each respective grating element, any suitable technique such as physical vapor deposition (PVD) or chemical vapor deposition (CVD) may be used to form high refractive index grating elements, i.e., within vias or trenches formed in a low refractive index coating. Prior to alignment and bonding such as with an adhesive or direct bonding process, additional low refractive index material may be deposited over the grating elements as an overcoat layer and planarized.

According to some examples, the refractive index of the high refractive index material defining the grating elements in each respective layer may be equal or substantially equal, and the grating element structures may be formed using the same or different materials. In a similar vein, the refractive index of the low refractive index material defining the low refractive index coating in each layer may be equal or substantially equal, and the low refractive index coatings may be formed from the same or different materials.

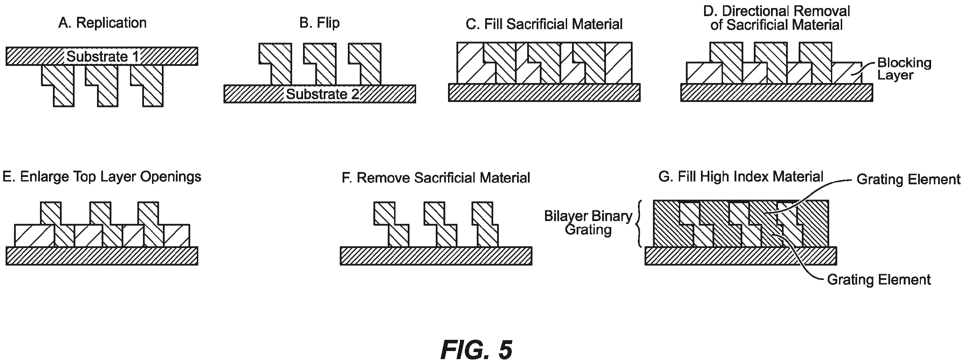

Shown in FIG. 5 is a further example process flow for manufacturing a bilayer binary 2D grating. Referring initially to FIGS. 5A and 5B, a patterned layer may be formed over a substrate using, for example, nanoimprint lithography (NIL) or chemical etching. The patterned layer may include a low refractive index material. The structure is then transferred to a second substrate and the patterned layer geometry may be tailored as shown in FIGS. 5C-5F, where a layer of a sacrificial material is deposited over the substrate and over the patterned layer to fill patterned openings (FIG. 5C) and then partially removed using a directional etch (FIG. 5D) to form a blocking layer. As shown in FIG. 5E, a further etching step, such as an isotropic etch, may enlarge the openings in one sub-layer of the patterned layer to form a bilayer binary pattern. Following removal of the sacrificial material (FIG. 5F), primary and secondary openings may be filled with a high refractive index material (FIG. 5G) to form a self-aligned bilayer array of grating elements.

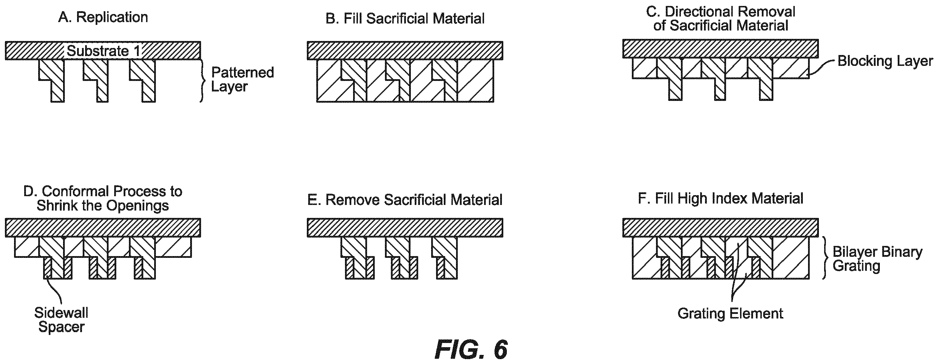

Referring to FIG. 6, shown is a still further example process flow for manufacturing a bilayer binary 2D grating. As shown in FIG. 6A, a patterned layer of low refractive index material may be formed over a substrate using, for example, nanoimprint lithography (NIL) or chemical etching. A layer of sacrificial material is deposited over the substrate and over the patterned layer to fill patterned openings (FIG. 6B) and then partially removed using a directional etch (FIG. 6C) to form a blocking layer. The patterned layer geometry may be tailored as shown in FIG. 6D, where sidewall spacers are formed within the patterned openings of one sub-layer of the patterned layer. Following removal of the sacrificial material (FIG. 6E), primary and secondary openings may be filled with a high refractive index material (FIG. 6F) to form a bilayer array of grating elements.

As disclosed herein, a bilayer binary grating may include a pair of adjacent layers each having a grating architecture composed of high (low) refractive index grating elements extending through a low (high) refractive index matrix across two-dimensions. The layer pair may be bonded along a single interface to form a bilayer having a binary grating architecture including paired grating elements from each layer.

The grating architecture elements within each layer may have any suitable corresponding or discrete geometry, including shape, dimensions, spacing, etc. The interlayer configuration of the grating architecture elements may also be defined in any suitable way, including relative displacement across and relative to the bilayer interface. By adjusting the displacement and geometry of the grating elements, the bilayer binary grating may present an effective slant angle that is locally tunable across an area of a waveguide.

A variable effective slant angle may enable improved coupling and waveguide performance relative to comparative devices having single layer slanted 2D gratings and additionally may be more economical to manufacture. As will be appreciated, the bilayer binary grating concept may be extended to grating architectures having three or more such layers. For example, FIG. 7 shows a cross-sectional view of a surface relief grating having a tri-layer 2D architecture according to some examples.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (e.g., augmented-reality system 800 in FIG. 8) or that visually immerses a user in an artificial reality (e.g., virtual-reality system 900 in FIG. 9). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 8, augmented-reality system 800 may include an eyewear device 802 with a frame 810 configured to hold a left display device 815(A) and a right display device 815(B) in front of a user's eyes. Display devices 815(A) and 815(B) may act together or independently to present an image or series of images to a user. While augmented-reality system 800 includes two displays, embodiments of this disclosure may be implemented in augmented-reality systems with a single NED or more than two NEDs.

In some examples, augmented-reality system 800 may include one or more sensors, such as sensor 840. Sensor 840 may generate measurement signals in response to motion of augmented-reality system 800 and may be located on substantially any portion of frame 810. Sensor 840 may represent a position sensor, an inertial measurement unit (IMU), a depth camera assembly, a structured light emitter and/or detector, or any combination thereof. In some examples, augmented-reality system 800 may or may not include sensor 840 or may include more than one sensor. In examples in which sensor 840 includes an IMU, the IMU may generate calibration data based on measurement signals from sensor 840. Examples of sensor 840 may include, without limitation, accelerometers, gyroscopes, magnetometers, other suitable types of sensors that detect motion, sensors used for error correction of the IMU, or some combination thereof.

Augmented-reality system 800 may also include a microphone array with a plurality of acoustic transducers 820(A)-820(J), referred to collectively as acoustic transducers 820. Acoustic transducers 820 may be transducers that detect air pressure variations induced by sound waves. Each acoustic transducer 820 may be configured to detect sound and convert the detected sound into an electronic format (e.g., an analog or digital format). The microphone array in FIG. 8 may include, for example, ten acoustic transducers: 820(A) and 820(B), which may be designed to be placed inside a corresponding ear of the user, acoustic transducers 820(C), 820(D), 820(E), 820(F), 820(G), and 820(H), which may be positioned at various locations on frame 810, and/or acoustic transducers 820(l) and 820(J), which may be positioned on a corresponding neckband 805.

In some examples, one or more of acoustic transducers 820(A)-(F) may be used as output transducers (e.g., speakers). For example, acoustic transducers 820(A) and/or 820(B) may be earbuds or any other suitable type of headphone or speaker.

The configuration of acoustic transducers 820 of the microphone array may vary. While augmented-reality system 800 is shown in FIG. 8 as having ten acoustic transducers 820, the number of acoustic transducers 820 may be greater or less than ten. In some examples, using higher numbers of acoustic transducers 820 may increase the amount of audio information collected and/or the sensitivity and accuracy of the audio information. In contrast, using a lower number of acoustic transducers 820 may decrease the computing power required by an associated controller 850 to process the collected audio information. In addition, the position of each acoustic transducer 820 of the microphone array may vary. For example, the position of an acoustic transducer 820 may include a defined position on the user, a defined coordinate on frame 810, an orientation associated with each acoustic transducer 820, or some combination thereof.

Acoustic transducers 820(A) and 820(B) may be positioned on different parts of the user's ear, such as behind the pinna, behind the tragus, and/or within the auricle or fossa. Or, there may be additional acoustic transducers 820 on or surrounding the ear in addition to acoustic transducers 820 inside the ear canal. Having an acoustic transducer 820 positioned next to an ear canal of a user may enable the microphone array to collect information on how sounds arrive at the ear canal. By positioning at least two of acoustic transducers 820 on either side of a user's head (e.g., as binaural microphones), augmented-reality device 800 may simulate binaural hearing and capture a 3D stereo sound field around about a user's head. In some examples, acoustic transducers 820(A) and 820(B) may be connected to augmented-reality system 800 via a wired connection 830, and in other examples acoustic transducers 820(A) and 820(B) may be connected to augmented-reality system 800 via a wireless connection (e.g., a Bluetooth connection). In still other examples, acoustic transducers 820(A) and 820(B) may not be used at all in conjunction with augmented-reality system 800.

Acoustic transducers 820 on frame 810 may be positioned along the length of the temples, across the bridge, above or below display devices 815(A) and 815(B), or some combination thereof. Acoustic transducers 820 may be oriented such that the microphone array is able to detect sounds in a wide range of directions surrounding the user wearing the augmented-reality system 800. In some examples, an optimization process may be performed during manufacturing of augmented-reality system 800 to determine relative positioning of each acoustic transducer 820 in the microphone array.

In some examples, augmented-reality system 800 may include or be connected to an external device (e.g., a paired device), such as neckband 805. Neckband 805 generally represents any type or form of paired device. Thus, the following discussion of neckband 805 may also apply to various other paired devices, such as charging cases, smart watches, smart phones, wrist bands, other wearable devices, hand-held controllers, tablet computers, laptop computers, other external compute devices, etc.

As shown, neckband 805 may be coupled to eyewear device 802 via one or more connectors. The connectors may be wired or wireless and may include electrical and/or non-electrical (e.g., structural) components. In some cases, eyewear device 802 and neckband 805 may operate independently without any wired or wireless connection between them. While FIG. 8 illustrates the components of eyewear device 802 and neckband 805 in example locations on eyewear device 802 and neckband 805, the components may be located elsewhere and/or distributed differently on eyewear device 802 and/or neckband 805. In some examples, the components of eyewear device 802 and neckband 805 may be located on one or more additional peripheral devices paired with eyewear device 802, neckband 805, or some combination thereof.

Pairing external devices, such as neckband 805, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 800 may be provided by a paired device or shared between a paired device and an eyewear device, thus reducing the weight, heat profile, and form factor of the eyewear device overall while still retaining desired functionality. For example, neckband 805 may allow components that would otherwise be included on an eyewear device to be included in neckband 805 since users may tolerate a heavier weight load on their shoulders than they would tolerate on their heads. Neckband 805 may also have a larger surface area over which to diffuse and disperse heat to the ambient environment. Thus, neckband 805 may allow for greater battery and computation capacity than might otherwise have been possible on a stand-alone eyewear device. Since weight carried in neckband 805 may be less invasive to a user than weight carried in eyewear device 802, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 805 may be communicatively coupled with eyewear device 802 and/or to other devices. These other devices may provide certain functions (e.g., tracking, localizing, depth mapping, processing, storage, etc.) to augmented-reality system 800. In the example of FIG. 8, neckband 805 may include two acoustic transducers (e.g., 820(I) and 820(J)) that are part of the microphone array (or potentially form their own microphone subarray). Neckband 805 may also include a controller 825 and a power source 835.

Acoustic transducers 820(I) and 820(J) of neckband 805 may be configured to detect sound and convert the detected sound into an electronic format (analog or digital). In the example of FIG. 8, acoustic transducers 820(I) and 820(J) may be positioned on neckband 805, thereby increasing the distance between the neckband acoustic transducers 820(I) and 820(J) and other acoustic transducers 820 positioned on eyewear device 802. In some cases, increasing the distance between acoustic transducers 820 of the microphone array may improve the accuracy of beamforming performed via the microphone array. For example, if a sound is detected by acoustic transducers 820(C) and 820(D) and the distance between acoustic transducers 820(C) and 820(D) is greater than, e.g., the distance between acoustic transducers 820(D) and 820(E), the determined source location of the detected sound may be more accurate than if the sound had been detected by acoustic transducers 820(D) and 820(E).

Controller 825 of neckband 805 may process information generated by the sensors on neckband 805 and/or augmented-reality system 800. For example, controller 825 may process information from the microphone array that describes sounds detected by the microphone array. For each detected sound, controller 825 may perform a direction-of-arrival (DOA) estimation to estimate a direction from which the detected sound arrived at the microphone array. As the microphone array detects sounds, controller 825 may populate an audio data set with the information. In examples in which augmented-reality system 800 includes an inertial measurement unit, controller 825 may compute all inertial and spatial calculations from the IMU located on eyewear device 802. A connector may convey information between augmented-reality system 800 and neckband 805 and between augmented-reality system 800 and controller 825. The information may be in the form of optical data, electrical data, wireless data, or any other transmittable data form. Moving the processing of information generated by augmented-reality system 800 to neckband 805 may reduce weight and heat in eyewear device 802, making it more comfortable to the user.

Power source 835 in neckband 805 may provide power to eyewear device 802 and/or to neckband 805. Power source 835 may include, without limitation, lithium ion batteries, lithium-polymer batteries, primary lithium batteries, alkaline batteries, or any other form of power storage. In some cases, power source 835 may be a wired power source. Including power source 835 on neckband 805 instead of on eyewear device 802 may help better distribute the weight and heat generated by power source 835.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 900 in FIG. 9, that mostly or completely covers a user's field of view. Virtual-reality system 900 may include a front rigid body 902 and a band 904 shaped to fit around a user's head. Virtual-reality system 900 may also include output audio transducers 906(A) and 906(B). Furthermore, while not shown in FIG. 9, front rigid body 902 may include one or more electronic elements, including one or more electronic displays, one or more inertial measurement units (IMUs), one or more tracking emitters or detectors, and/or any other suitable device or system for creating an artificial reality experience.

Artificial-reality systems may include a variety of types of visual feedback mechanisms. For example, display devices in augmented-reality system 800 and/or virtual-reality system 900 may include one or more liquid crystal displays (LCDs), light emitting diode (LED) displays, organic LED (OLED) displays, digital light project (DLP) micro-displays, liquid crystal on silicon (LCoS) micro-displays, and/or any other suitable type of display screen. Artificial-reality systems may include a single display screen for both eyes or may provide a display screen for each eye, which may allow for additional flexibility for varifocal adjustments or for correcting a user's refractive error. Some artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some artificial-reality systems may include one or more projection systems. For example, display devices in augmented-reality system 800 and/or virtual-reality system 900 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

Artificial-reality systems may also include various types of computer vision components and subsystems. For example, augmented-reality system 800 and/or virtual-reality system 900 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

Artificial-reality systems may also include one or more input and/or output audio transducers. In the examples shown in FIG. 9, output audio transducers 906(A) and 906(B) may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some examples, a single transducer may be used for both audio input and audio output.

While not shown in FIG. 8, artificial-reality systems may include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments and examples disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the examples disclosed herein. This exemplary description is not intended to be exhaustive or to be limited to any precise form disclosed. Many modifications and variations are possible without departing from the spirit and scope of the present disclosure. The examples disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "approximately" in reference to a particular numeric value or range of values may, in certain examples, mean and include the stated value as well as all values within 10% of the stated value. Thus, by way of example, reference to the numeric value "50" as "approximately 50" may, in certain examples, include values equal to 50t5, i.e., values within the range 45 to 55.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a bonding layer that comprises or includes titanium dioxide include embodiments where a bonding layer consists essentially of titanium dioxide and embodiments where a bonding layer consists of titanium dioxide.

## Claims

1. A surface relief grating comprising:
a primary grating layer including an array of primary grating elements; and
a secondary grating layer including an array of secondary grating elements overlying the primary grating layer, wherein the secondary grating elements are at least partially laterally offset from the primary grating elements.

2. The surface relief grating of claim 1, where each of the secondary grating elements at least partially overlies a respective one of the primary grating elements.

3. The surface relief grating of claim 1 or 2, wherein the primary grating layer comprises a 2D array of the primary grating elements and the secondary grating layer comprises a 2D array of the secondary grating elements.

4. The surface relief grating of any preceding claim, wherein the primary grating elements and the secondary grating elements each comprise substantially vertical sidewalls.

5. The surface relief grating of any preceding claim, wherein the primary grating elements and the secondary grating elements each comprise a substantially oval areal profile or a substantially circular areal profile;
preferably wherein the primary grating elements and the secondary grating elements each comprise a high refractive index material.

6. The surface relief grating of any preceding claim, wherein the primary grating layer comprises a primary low refractive index matrix surrounding the primary grating elements and the secondary grating layer comprises a secondary low refractive index matrix surrounding the secondary grating elements.

7. The surface relief grating of any preceding claim, further comprising a tertiary grating layer including an array of tertiary grating elements overlying the secondary grating layer, wherein the tertiary grating elements are at least partially laterally offset from the secondary grating elements.

8. The surface relief grating of any preceding claim, wherein respective pairs of the primary and secondary grating elements form a grating structure having an effective slant angle;
preferably wherein the effective slant angle varies as a function of position across the primary and secondary grating layers.

9. A surface relief grating comprising:
a primary grating layer including an array of primary grating elements; and
a secondary grating layer including an array of secondary grating elements, wherein respective pairs of the primary and secondary grating elements form a grating structure having a slant angle.

10. The surface relief grating of claim 9, wherein the primary grating elements and the secondary grating elements each comprise substantially vertical sidewalls;
preferably wherein the slant angle varies as a function of position across the primary and secondary grating layers.

11. A method comprising:
forming a low refractive index layer over a substrate, the low refractive index layer comprising a primary sub-layer having an array of primary openings and a secondary sub-layer overlying the primary sub-layer and having an array of secondary openings, wherein the secondary openings are at least partially laterally offset from the primary openings; and
forming a high refractive index layer within the primary and secondary openings.

12. The method of claim 11, wherein forming the low refractive index layer comprises nanoimprint lithography and/or nano-replication.

13. The method of claim 11 or 12, wherein the substrate comprises an inorganic solid selected from the group consisting of silicon carbide, lithium niobate, and a high-index glass.

14. The method of any of claims 11 to 13, wherein the primary openings and the secondary openings each comprise substantially vertical sidewalls.

15. The method of any of claims 11 to 14, wherein forming the high refractive index layer comprises a process selected from the group consisting of chemical vapor deposition, epitaxial deposition, atomic layer deposition, and electron beam deposition;
preferably wherein the high refractive index layer backfills the primary and secondary openings.
